# EUROPEAN PATENT APPLICATION

(11) **EP 3 454 112 A2**
(43) Date of publication of application: **13.03.2019**
(21) Application number: 18193859.8
(22) Date of filing: 11.09.2018
(51) Int. Cl.: G02F 1/133, G02F 1/1347, G02F 1/1333, G02F 1/1335

(54) **AN ELECTRONIC DISPLAY WITH AN IMPROVED DEAD-FRONT PRESENTATION**

(30) Priority: 11.09.2017 US 201715700994
(71) Applicant: Visteon Global Technologies, Inc., Van Buren Township, MI 48111-5711 (US)
(72) Inventor: Sharif, Qais, Northville, MI 48168 (US); Weindorf, Paul Fredrick Luther, novi, MI 48377 (US)
(74) Representative: Dummett Copp LLP

(57) **Abstract**

Disclosed herein is an electronic display with an improved dead-front presentation. The electronic display comprises a backlit display configured to present content, a dichroic guest host dye layer disposed on the backlit display and a circuit electrically coupled to the backlit display and to the dichroic guest host dye layer. The guest host dye layer has: (i) an on state in which guest host dye crystals included therein are oriented in an orthogonal orientation to the backlit display whereby light from the backlit display is able to pass through the guest host dye layer; and (ii) an off state in which guest host dye crystals included therein are oriented in a parallel orientation to the backlit display whereby transmission of light through the guest host dye layer is effectively blocked. The circuit is configured, in response to the backlit display being on, to control the guest host dye layer to be in the on state and is configured, in response to the backlit display being off, to control the guest host dye layer to be in the off state.

## Description

### BACKGROUND

Electronic displays are provided in many contexts to electronically render digital information to a viewer. The electronic displays receive information, and render the information through lighted cells in patterns that reflect the texts and pictures employed to convey the information.

The electronic displays may be implemented in a variety of environments where electronic displays have not traditionally been employed, such as a vehicle, home appliance, advertisement/billboard, and the like. Accordingly, for aesthetic purposes, when employing such electronic displays, ensuring that the electronic displays blend into a bezel or surrounding background may be desired.

This effect, also known as a "dead-panel" appearance or "dead-front" appearance, and has been attempted by numerous implementers of electronic displays integrated into a variety of contexts and environments. Several implementations have been attempted; however, with each implementation drawbacks become apparent.

### SUMMARY

The following description relates to providing an electronic display with an improved dead-front presentation to a viewer of the electronic display.

According to the invention, there is provided an electronic display, comprising:
a backlit display configured to present content;
a dichroic guest host dye layer disposed on the backlit display, or separated by an air gap from the backlit display, the guest host dye layer having: (i) an on state in which guest host dye crystals included therein are oriented in an orthogonal orientation to the backlit display whereby light from the backlit display is able to pass through the guest host dye layer; and (ii) an off state in which guest host dye crystals included therein are oriented in a parallel orientation to the backlit display whereby transmission of light through the guest host dye layer is effectively blocked; and
a circuit electrically coupled to the backlit display and to the dichroic guest host dye layer and being configured, in response to the backlit display being on, to control the guest host dye layer to be in the on state and being configured, in response to the backlit display being off, to control the guest host dye layer to be in the off state.

The electronic display may comprise a transparent lens. The term "transparent lens" as used herein is conventionally used in technical field of displays to mean a substantially transparent layer or sheet, which may be clear or colored and either planar or curved, and which may be provided separately or in conjunction with other layers, and positioned between the viewer and display elements for providing information to the viewer.

The dichroic guest host dye layer is preferably in physical abutment with the backlit display, and the transparent lens is preferably in physical abutment with the dichroic guest host dye layer.

The dichroic guest host dye layer is preferably in physical abutment with the transparent lens, and the transparent lens is preferably in physical abutment with the backlit display.

In some embodiments, the electronic display comprises said air gap in between the backlit display and the dichroic guest host dye layer.

The provision of an air gap may be desirable for any of several reasons. For example, the designer may, for aesthetic reasons, wish for the display to appear to be recessed, for example deeper within an instrument panel. Or, the designer may wish for the external surfaces of the display assembly nearest the viewer to be angled or curved with respect to the plane of the display screen itself.

Another reason for providing an air gap is when there are other display elements in addition to the backlit display, for example a light or one or more gauges, in an area laterally adjacent to the display. Such a laterally adjacent area, and any associated display elements, will then also be hidden from view when the guest host dye layer is in the off state

The electronic display may further comprise at least one mechanical gauge with the backlit display, for example laterally adjacent to the backlit display, said gauge being provided in said air gap.

The dichroic guest host dye layer may be a curved layer.

The transparent lens is curved where the transparent lens is in abutment with the dichroic guest host dye layer.

The electronic display may further comprise a sensor for sensing a measure of the ambient light incident on the electronic display, the sensor being coupled to the circuit. The circuit may then be configured to maintain a transmission state of the dichroic guest host dye layer intermediate between the on and off states based on sensed data from the sensor. In this way, the circuit may be configured to increase the transmission of light through the guest host dye layer when the ambient light is increased and decrease the transmission of light through the guest host dye layer when the ambient light is decreased.

Additional features of the invention will be set forth in the description which follows, and in part will be apparent from the description, or may be learned by practice of the invention.

It is to be understood that both the foregoing general description and the following detailed description are exemplary and explanatory and are intended to provide further explanation of the invention as claimed. Other features and aspects will be apparent from the following detailed description, the drawings, and the claims.

### DESCRIPTION OF THE DRAWINGS

The invention will now be further described, by way of example only, and with reference to the accompanying drawings, in which like numerals refer to like items, and in which:
Figures 1A and 1B illustrate an example of the operating principles associated with a dichroic guest host dye layer;
Figure 2 illustrates a side-view of an implementation of a display implementing the aspects disclosed herein;
Figure 3 illustrates a side-view of a second implementation of a display implementing the aspects disclosed herein;
Figure 4 illustrates a side-view of a third implementation of a display implementing the aspects disclosed herein;
Figure 5 illustrates a side-view of a fourth implementation of a display implementing the aspects disclosed herein;
Figure 6 illustrates a side-view of a fifth implementation of a display implementing the aspects disclosed herein;
Figure 7 illustrates a side-view of a sixth implementation of a display implementing the aspects disclosed herein;
Figure 8 illustrates a side-view of a seventh implementation of a display implementing the aspects disclosed herein;
Figure 9 illustrates a side-view of an eighth implementation of a display implementing the aspects disclosed herein;
Figure 10 illustrates a side-view of a ninth implementation of a display implementing the aspects disclosed herein;
Figure 11 illustrates a side-view of a tenth implementation of a display implementing the aspects disclosed herein;
Figure 12 illustrates a side-view of an eleventh implementation of a display implementing the aspects disclosed herein; and
Figure 13 illustrates a side-view of a twelfth implementation of a display implementing the aspects disclosed herein.

### DETAILED DESCRIPTION

The invention is described more fully hereinafter with references to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. It will be understood that for the purposes of this disclosure, "at least one of each" will be interpreted to mean any combination the enumerated elements following the respective language, including combination of multiples of the enumerated elements. For example, "at least one of X, Y, and Z" will be construed to mean X only, Y only, Z only, or any combination of two or more items X, Y, and Z (e.g. XYZ, XZ, YZ, X). Throughout the drawings and the detailed description, unless otherwise described, the same drawing reference numerals are understood to refer to the same elements, features, and structures. The relative size and depiction of these elements may be exaggerated for clarity, illustration, and convenience.

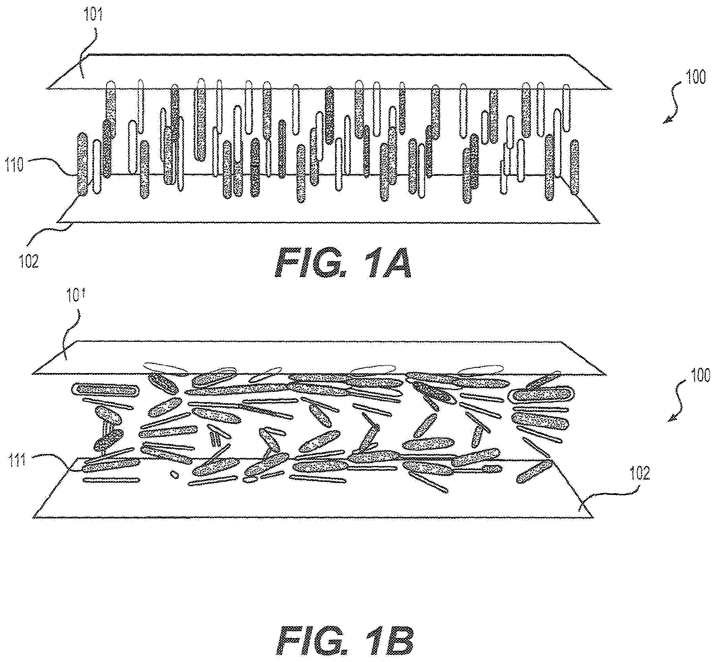

The aspects disclosed herein employ dichroic guest host dye technology. Figures 1A and 1B illustrate an example of the operating principles associated with a dichroic guest host dye layer 100. Referring to both Figures 1A and 1B, an exemplary cell is shown, with an electrode 101 and 102. In the context of this description, the term "dichroic guest host dye layer 100" includes the outer substrates, electrode layers and rubbing layers commonly used to construct and liquid crystal cell in addition to the guest host liquid crystal material. The substrates may be plastic, glass or other suitable materials. The transparent electrodes may be indium tin oxide (ITO) or other suitable materials. The rubbing layers used to anchor the liquid crystal material may be polyimide or other suitable materials.

Referring to Figure 1A, an 'on' state is shown. As such, light is allowed to pass through. In Figure 1A, a collection of dichroic dye crystals 110 are shown, and are orthogonal to each of electrodes 101 and 102.

Referring to Figure 1B, an 'off state is shown. As such, light is effectively blocked, or the transmission of light is reduced. Thus, the same dichroic crystals are now in a non-orthogonal state 111. During the non-orthogonal state 111, light is not allowed to reflect through (or the transmission of light is limited). As such, a "dead-front" appearance is achieved. Intermediate levels of transmission are also possible between the fully "off" and fully "on" states.

In the employment of a dichroic guest host dye layer 100, the amount of transmission allowed in each state may be set by the concentration of dichroic guest host dye employed in the construction of the layer 100. As such, an implementer employing the layer in the manners described herein may adjust the concentration accordingly.

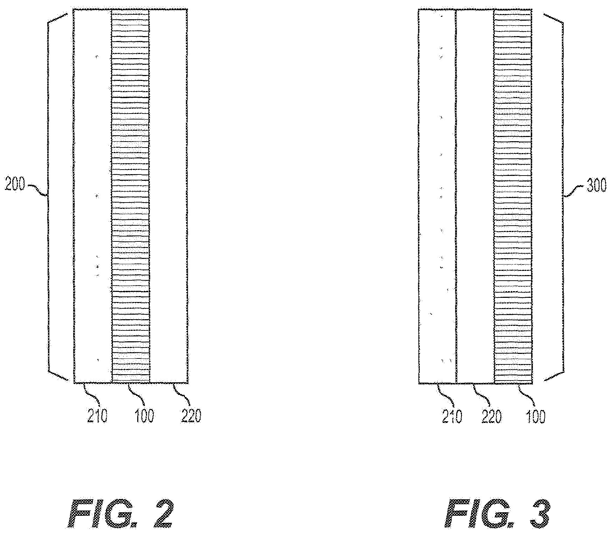

Figure 2 illustrates a side-view of an implementation of a display 200 implementing the aspects disclosed herein. A backlit display 210 is shown first, at a left most position. This layer is physically furthest away from the viewer.

Disposed on the backlit layer 210 is a dichroic guest host dye layer 100. This layer is electrically coupled to a control signal (not shown), and in response to the display 210 displaying information, is effectively controlled to be in an 'on state' 110, and in response to the display 210 being off, is effectively controlled to be in an 'off state' 111. Intermediate transmission states are also possible and the dichroic guest host dye layer 100 may be adjusted or driven in accordance with the ambient lighting conditions using light sensor(s) in order to maintain display visibility while keeping the lowest useable transmission level to keep a dead-front appearance even when ambient light incident on the display changes.

Disposed on the dichroic guest host dye layer 100 is a glass or plastic lens 220. This lens 220 is see-through, and allows light to be transmitted from the display 210, the dichroic guest host dye layer 100 (when in the 'on state' 110) to a viewer.

In display 200, when the layers are shown in abutment with each other, this implies the layers are physically touching each other as shown, and physically in abutment with each other, utilizing optical bonding or other suitable means.

Figure 3 illustrates a side-view of an implementation of a display 300 implementing the aspects disclosed herein. Display 300 is similar to display 200, however the lens 220 and the dichroic guest host dye layer 100 are switched

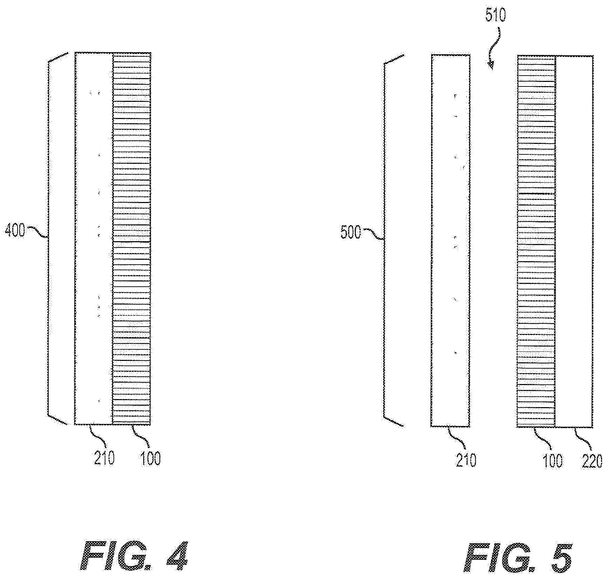

Figure 4 illustrates a side-view of an implementation of a display 400 implementing the aspects disclosed herein. Display 400 is similar to display 200, except a lens 220 is not implemented.

Figure 5 illustrates a side-view of an implementation of a display 500 implementing the aspects disclosed herein. Display 500 is similar to display 200; however, an air gap 510 is added in between the display 210 and the dichroic guest host dye layer 100.

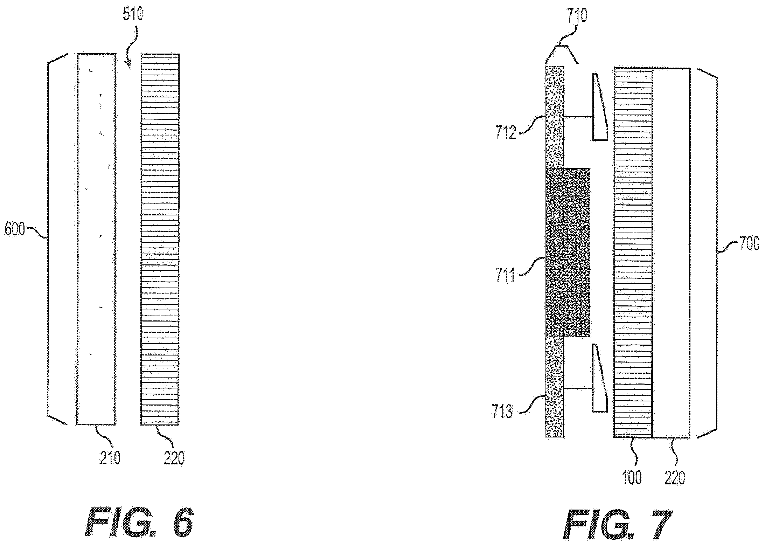

Figure 6 illustrates a side-view of an implementation of a display 600 implementing the aspects disclosed herein. Display 600 is similar to display 500; however, a lens 220 is not included.

Figures 7 to 9 illustrate various side-views of a different sort of display 710 incorporating the aspects disclosed herein. The display 710 shown in these views incorporates at least one mechanical gauge and a backlit display.

Referring to Figure 7, the display 710 includes two mechanical gauges 712, 713, with a backlit display 711 disposed between. Thus, all three display elements 711, 712, 713 are visible to a viewer of the display 710. In Figure 7, the display 700 shown includes a dichroic guest host dye layer 100 disposed to overlap with the display 710 (but not in physical abutment), and a lens 220.

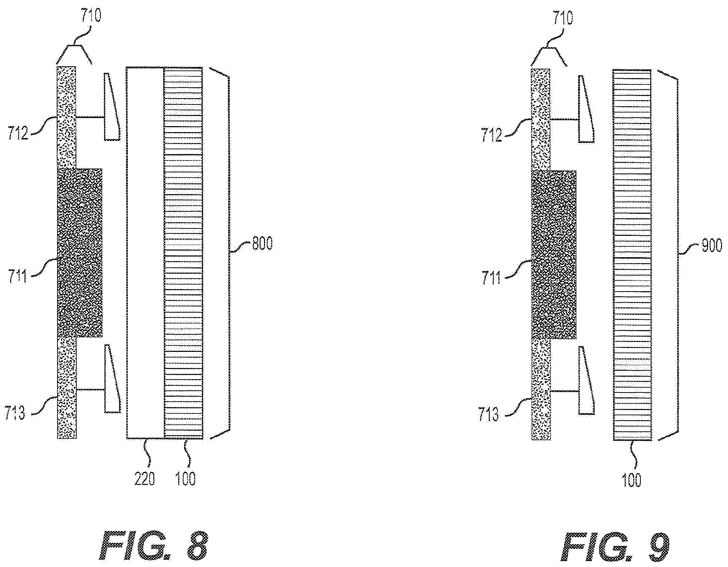

Referring to Figure 8, the display 800 is similar to the display 700, however, the placement the dichroic guest host dye layer 100 and the lens 220 are switched.

Referring to Figure 9, display 900 is similar to display 700, however the lens 220 is omitted.

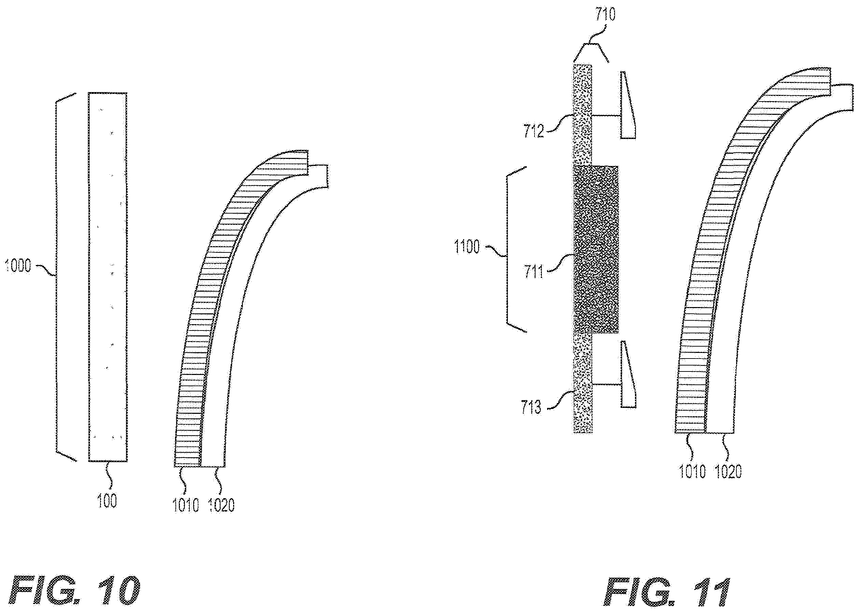

Figures 10 to 13 illustrate side-views of displays employing curved structures. In these implementations, the dichroic guest host dye layer 100 is replaced with a curved dichroic guest host dye layer 1010. Similarly, and where shown, the lens 220 is replaced with a curved lens 1020.

Referring to Figure 10, display 1000 is shown with a curved dichroic guest host dye layer 1010 and a curved lens 1020. Although not shown, in another embodiment the curved lens 1020 may be omitted based on an implementer's choice.

Referring to Figures 11 to 13, display 710 is implemented in lieu of display 100. In Figure 11, display 1100 is similar to display 1000 except for the above-mentioned difference.

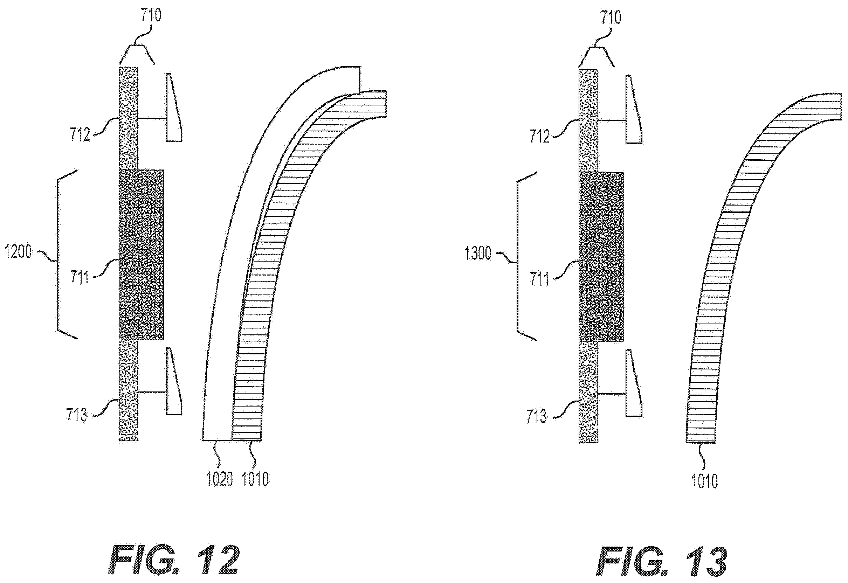

In Figure 12, display 1200 is similar to display 1100, however, the curved dichroic guest host dye layer 1010 and the curved lens 1020 are switched. Finally, in Figure 13, display 1300 is similar to displays 1100 and 1200, except the curved lens 1020 is omitted

As a person skilled in the art will readily appreciate, the above description is meant as an illustration of implementation of the principles this invention. This description is not intended to limit the scope or application of this invention in that the invention is susceptible to modification, variation and change, without departing from scope of this invention, as defined in the following claims.

## Claims

1. An electronic display, comprising:
a backlit display configured to present content;
a dichroic guest host dye layer disposed on the backlit display, or separated by an air gap from the backlit display, the guest host dye layer having: (i) an on state in which guest host dye crystals included therein are oriented in an orthogonal orientation to the backlit display whereby light from the backlit display is able to pass through the guest host dye layer; and (ii) an off state in which guest host dye crystals included therein are oriented in a parallel orientation to the backlit display whereby transmission of light through the guest host dye layer is effectively blocked; and
a circuit electrically coupled to the backlit display and to the dichroic guest host dye layer and being configured, in response to the backlit display being on, to control the guest host dye layer to be in the on state and being configured, in response to the backlit display being off, to control the guest host dye layer to be in the off state.

2. The electronic display according to claim 1, further comprising a transparent lens.

3. The electronic display according to claim 1 or claim 2, wherein the dichroic guest host dye layer is in physical abutment with the backlit display, and the transparent lens is in physical abutment with the dichroic guest host dye layer.

4. The electronic display according to claim 2, wherein the dichroic guest host dye layer is in physical abutment with the transparent lens, and the transparent lens is in physical abutment with the backlit display.

5. The electronic display according to claim 1 or claim 2, in which said dichroic guest host dye layer is separated by an air gap from the backlit display, wherein the electronic display further comprises at least one mechanical gauge included with the backlit display said gauge being provided in said air gap.

6. The display according to claim 5, wherein the dichroic guest host dye layer is a curved layer.

7. The electronic display according to claim 6 when dependent from claim 2, wherein the transparent lens is curved where the transparent lens is in abutment with the dichroic guest host dye layer.

8. The electronic display according to any preceding claim, further comprising a sensor for sensing a measure of the ambient light incident on the electronic display, the sensor being coupled to said circuit, wherein the circuit is configured to maintain a transmission state of the dichroic guest host dye layer intermediate between said on state and said off state based on sensed data from the sensor whereby said circuit increases the transmission of light through the guest host dye layer when the ambient light is increased and decreases the transmission of light through the guest host dye layer when the ambient light is decreased.
